# EUROPEAN PATENT APPLICATION

(11) **EP 4 614 323 A1**
(43) Date of publication of application: **10.09.2025**
(21) Application number: 24162377.6
(22) Date of filing: 08.03.2024
(51) Int. Cl.: G06F 9/48, G06F 9/50, H04L 41/0803, H04L 41/14, H04L 41/5041, H04L 41/5051, H04L 41/5054, G06F 9/455

(54) **METHOD AND SYSTEM FOR CONTROLLING RESOURCE INSTANCES OF A COMMUNICATION SYSTEM**

(71) Applicant: Deutsche Telekom AG, 53113 Bonn (DE)
(72) Inventor: TSAI, Bernard, 65203 Wiesbaden (DE)
(74) Representative: Blumbach · Zinngrebe Patentanwälte PartG mbB

(57) **Abstract**

A method for controlling resource instances is proposed, comprising the steps of:
a) storing a declarative model (610) in a database (620), wherein the declarative model comprises a plurality of resource elements (100, 210-250, 311-352), each resource element representing a resource of a communication system, wherein each resource element is associated with a resource type, and wherein at least one resource element is modeled to provide a customer service (100, 710) consumable by a customer and the remaining resource elements are modeled to provide a service consumable by another resource element,
b) controlling resource instances of a communication system by a set of controllers (640, 651, 652, 653) depending on the stored declarative model (610), wherein the set of controllers comprises
- a type-specific controller (651, 652, 653) for each type of resource elements defined by the declarative model, wherein each type-specific controller is adapted to control resource instances of the respective associated resource type, and
- a relationship controller (640) which is adapted to control service-related relationships between resource instances.

Further, a system (600) for performing the method is proposed.

## Description

The present invention is directed to a method and a system for controlling resource instances of a communication system, wherein in particular at least one of the resource instances is a customer service.

### Background

Telecommunication companies need to provide their services with high quality and in a reliable way. These services are based on complex solutions comprising a vast amount of different technologies such as software based network functions and highly optimized chip sets, which are both quickly evolving. This leads to a stability-flexibility dilemma since it may not be possible to maintain service availability and at the same time continuously apply changes to the various solution elements.

It is known to utilize orchestration techniques to simplify the management of complex infrastructures, wherein orchestration is the automated configuring, coordinating, and managing of computer systems and software. Many tools exist to automate server configuration and management, such as for example Kubernetes, which is an open-source container orchestration system for automating software deployment, scaling, and management.

### Summary of the Invention

It is an object of the present invention to provide an improved and/or simplified way for managing and/or controlling complex infrastructures comprising a plurality of resource instances in order to provide at least one service, in particular a customer service.

The technical problem cited above is solved by the features of the independent claims. Preferred embodiments are set forth in the dependent claims.

Accordingly, a method is provided, which comprises the steps of
a) storing a declarative model in a database, wherein the declarative model comprises a plurality of resource elements, each resource element representing a resource of a communication system, wherein each resource element is associated with a resource type, and wherein at least one resource element is modeled to provide a customer service consumable by a customer and the remaining resource elements are modeled to provide a service consumable by another resource element, and
b) controlling resource instances of a communication system by a set of controllers depending on the stored declarative model, wherein the set of controllers comprises a type-specific controller for each type of resource elements defined by the declarative model, wherein each type-specific controller is adapted to control resource instances of the respective associated resource type, and a relationship controller which is adapted to control service-related relationships between resource instances. All resource elements provide a service, which may be consumed either directly by customers or by other resource elements. The resource elements preferably are categorized according to the services they provide and the way they can be managed, and based thereon the type is defined that is associated with each resource element. The service-related relationships may be categorized as either context relationships or service relationships, wherein a context relationship is a relationship in which an instance of a resource element can only be deployed when an instance of another resource element is providing its service, and wherein a service relationship describes a relationship in which a resource element can be installed without the other resource element providing its service but which can only become active when the other resource element is providing its service.

It is noted that a resource element represents a part of the declarative model, and therefore is a modelling entity, whereas a resource instance is a physical entity that is managed by the respective type-specific controller depending on the definition of the corresponding resource element, wherein depending on the definition of a single resource element several resource instances may be created and managed by a type-specific controller. Therefore, in the following the terms resource element and resource instance are used interchangeably depending on the context.

The customer service preferably is an end-to-end customer service provided by a communications provider, wherein the customer service utilizes at least one communications network, in particular a telecommunications network. End-to-end customer service essentially means that all stages are considered that are needed to fulfill a customer request. For this purpose, the declarative model comprises all involved resource elements, at least one of which provides a service to a customer.

The provision of a customer service typically represents a complex solution involving a plurality of interacting resource elements. Thus, a customer service preferably is modelled by decomposing such complex solution into a tree of resource elements, wherein the customer service itself represents as a top-level resource element the root of the tree and all resource elements, which directly contribute to the service, are added as branches to this root element. This approach may then with advantage be iterated recursively to the level of detail needed, resulting in a tree structure of resource elements. In a preferred embodiment, the resource elements of the declarative model have a type-dependent hierarchical structure, in particular a tree structure, wherein the root resource element of the tree structure is a resource element, which is modeled to provide a customer service.

Preferably, a specific controller is provided to manage the resource instances of a respective type of resource element. By utilizing type-specific controllers and a separate relationship controller, advantageously there is no need to create a central orchestration solution, which is knowledgeable of the configuration capabilities of all resource elements. Instead the knowledge is distributed to a set of resource element type specific controllers, which are capable of managing not only a resource instance itself but also know how to interoperate with all dependent resource instances and the clients the resource instance supports with its services. In particular, a dependent resource instance provides a service for the controlled resource instance and clients are service consumers of a service provided by the controlled resource instance. In order to automatically manage the lifecycle of instances of the resource elements, each specific controller is adapted to manage the lifecycle of the instances of the resource elements of the respective type.

Accordingly, in a preferred embodiment of the method, each resource element in the declarative model is associated with a generic resource lifecycle model, wherein the generic resource lifecycle model comprises a pre-defined set of states and a pre-defined set of transitions between the states, wherein each type-specific controller is adapted to manage the lifecycle of a resource instance of the respective associated resource type depending on the generic resource lifecycle model, wherein each type-specific controller in particular is adapted to effect state transitions of a resource instance of the respective associated resource type, and each service-related relationship between two resource elements defined in the declarative model is associated with a generic relationship lifecycle model, wherein the generic relationship lifecycle model comprises a pre-defined set of states and a pre-defined set of transitions between the states, wherein the relationship controller is adapted to manage the lifecycle of a service-related relationship between two resource instances depending on the generic relationship lifecycle model, wherein the relationship controller in particular is adapted to effect state transitions of a service-related relationship between two resource instances.

The declarative model preferably expresses an intent, wherein the intent is modelled as a specification of a desired target state of at least one resource element. The approach advantageously allows for full automation of the lifecycles of all resource elements employed for providing a solution. Human intervention is only required for defining the desired target state, the resolution of conflicting intents and handling of problems where resource elements are not capable of converging to the desired target state within a given time frame.

Advantageously, each resource element defined in the declarative model is associated with a target state, wherein each type-specific controller controls the resource instances of the respective associated resource type in such a way that the resource instances converge towards their respective target states, and each service-related relationship defined in the declarative model is associated with a target state, wherein the relationship controller controls the service-related relationships between resource instances in such a way that the service-related relationships converge towards their respective target states.

In a complex solution for providing a customer service, which involves a plurality of resource elements, changes to the various resource elements, and thus to the instances thereof, typically need to be applied continuously. For that purpose, preferably, change information for changing the stored declarative model is provided and in response to the provided change information the following steps are performed:
c) changing the declarative model, which is stored in the database, depending on the provided change information, wherein changing the declarative model may preferably be performed by replacing all or part of the stored declarative model with a respective updated version,
d) automatically adapting the resource instances controlled by the type-specific controllers and/or the service-related relationships between the resource instances controlled by the relationship controller to the changed declarative model.

With advantage, for adapting the resource instances to the changed declarative model at least one type-specific controller executes a first pre-defined reconciliation algorithm and/or for adapting the service-related relationships between the resource instances to the changed declarative model the relationship controller executes a second pre-defined reconciliation algorithm, wherein the first and/or the second pre-defined reconciliation algorithm may preferably be executed iteratively.

Model-based closed-loop automation via reconciliation allows to continuously converge the current state of resource elements to the desired target state even in the case of unexpected errors without having to create declarative error handling procedures. It is also possible to detect and inform about resource elements, the instances of which are not converging to the desired target state in a certain time frame.

In a further aspect, a system is provided, which comprises a database with a declarative model stored therein, wherein the declarative model comprises a plurality of resource elements, each resource element representing a resource of a communication system, wherein each resource element is associated with a resource type, and wherein at least one resource element is modeled to provide a customer service consumable by a customer and the remaining resource elements are modeled to provide a service consumable by another resource element, and which further comprises a set of controllers for controlling resource instances of a communication system depending on the stored declarative model, wherein the set of controllers comprises a type-specific controller for each type of resource elements defined by the declarative model, wherein each type-specific controller is adapted to control resource instances of the respective associated resource type, and a relationship controller which is adapted to control service-related relationships between resource instances.

The system preferably is adapted to perform the various embodiments of the method as described above. Therefore, each type-specific controller preferably is adapted to manage the lifecycle of a resource instance of the respective associated resource type depending on an associated generic resource lifecycle model, wherein the generic resource lifecycle model comprises a pre-defined set of states and a pre-defined set of transitions between the states, wherein each type-specific controller in particular is adapted to effect state transitions of a resource instance of the respective associated resource type, and the relationship controller is adapted to manage the lifecycle of a service-related relationship between two resource instances depending on an associated generic relationship lifecycle model, wherein the generic relationship lifecycle model comprises a pre-defined set of states and a pre-defined set of transitions between the states, wherein the relationship controller in particular is adapted to effect state transitions of a service-related relationship between two resource instances.

Advantageously, each resource element defined in the declarative model is associated with a target state, wherein each type-specific controller is adapted to control the resource instances of the respective associated resource type in such a way that a convergence towards the respective target state is effected, and each service-related relationship defined in the declarative model is associated with a target state, wherein the relationship controller is adapted to control the service-related relationships between resource instances in such a way that a convergence towards the respective target state is effected.

For applying changes, the system preferably comprises an application programming interface adapted to receive change information, wherein the system is adapted to perform the following steps in response to receiving change information:
- changing the declarative model, which is stored in the database, depending on the provided change information, and
- automatically adapt the resource instances controlled by the type-specific controllers and/or the service-related relationships between the resource instances controlled by the relationship controller to the changed declarative model.

Each type-specific controller preferably is adapted to execute a first pre-defined reconciliation algorithm for adapting controlled resource instances to the changed declarative model, and whereon the relationship controller is adapted to execute a second pre-defined reconciliation algorithm for adapting controlled service-related relationships between the resource instances to the changed declarative model, wherein each type-specific controller may be adapted to iteratively execute the first pre-defined reconciliation algorithm, and wherein the relationship controller may be adapted to iteratively execute the second pre-defined reconciliation algorithm.

It is to be noted that the system described above preferably is adapted for performing the above-described method, wherein accordingly the system described above may for this purpose with advantage be respectively configured to perform any aspect described above with respect to the method.

### Brief Description of the Drawings

The invention is described in detail below by way of preferred embodiments in connection with the accompanying drawings, wherein
- Figure 1: schematically shows an exemplary decomposition of a 5G network service into various resource elements,
- Figure 2: schematically shows a lifecycle of a resource element utilized in a preferred embodiment of the method,
- Figure 3: schematically shows the lifecycle of a relationship between two resource elements utilized in a preferred embodiment of the method,
- Figure 4: schematically a preferred embodiment of a system in the form of an automation framework,
- Figure 5: schematically shows an exemplary basic structure of a reconciliation algorithm for controllers for resource elements, and
- Figure 6: schematically shows an exemplary basic structure of a reconciliation algorithm for a generic relationship controller.

### Detailed Description of exemplary Embodiments

The invention proposes to model a complex solution for a customer service by decomposing it into a tree of resource elements, wherein the customer service itself represents as a top-level resource element the root of the tree and all resource elements which directly contribute to this service are added as branches to this root element. This approach can then be recursively iterated to the level of detail needed leading to a tree structure of resource elements.

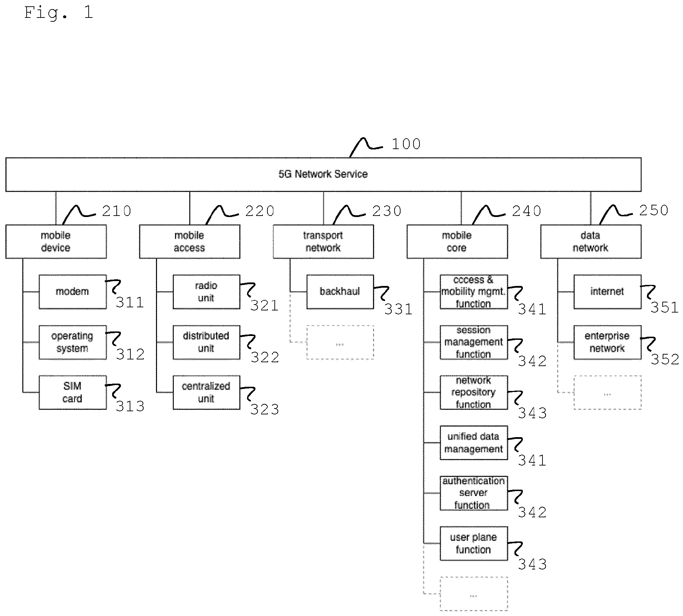

Fig. 1 shows as an example how a 5G network service can be decomposed into its various resource elements. All resource elements shown in Fig. 1 provide a service, which may be consumed either directly by customers or by other resource elements. In the shown example, the 5G network service 100 is a customer service directly consumed by customers.

For providing the service 100 a plurality of further resource elements are needed. In the example shown in Fig. 1, the service 100 is a consumer with respect to the resource elements 210, 220, 230, 240 and 250, wherein resource element 210 represents a mobile device, resource element 220 represents a mobile access network, resource element 230 represents a transport network, resource element 240 represents a mobile core network and resource element 250 represents a data network. The resource elements 210, 220, 230, 240 and 250 thus form a hierarchical level below the top-level service 100, wherein the resource elements 210, 220, 230, 240 and 250 in turn are consumers of services provided by further resource elements of a further hierarchical level. In the shown example, the resource element 210, i.e. the mobile device, consumes services provided by a modem 311, an operating system 312 and a SIM card 313. In the shown example, the resource element 220, i.e. the mobile access network, is provided as a RAN (radio access network), which is split into a radio unit, a distributed unit and a centralized unit, so that the resource element 220 consumes the services provided by the respective resource elements 321, 322 and 323. For the resource element 230, i.e. the transport network, a lower-level resource element 331 is shown in Fig. 1, which is a backhaul network. The transport network typically consumes services of further resource elements, which is indicated by dotted lines. In 5G, the transport network 230 is used to connect the RAN and the mobile core network. For the resource element 240, i.e. the mobile core network, several resource elements 341-346 in the form of network functions are shown, which provide services for the resource element mobile core network. The exemplary shown network functions comprise an access and mobility management function (AMF) 341, a session management function (SMF) 342, a network repository function (NRF) 343, a unified data management (UDM) 344, an authentication server function (AUSF) 345 and a user plane function (UPF) 346. Further, in the shown example, the resource element 250, i.e. the data network, exemplarily consumes services provided by the Internet 351 and by an enterprise network 352.

The resource elements of a lower hierarchical level are subelements of the respective higher-level resource element, wherein the services provided by these subelements may be regarded as sub-services of the service provided by the respective higher-level resource element. Fig. 1 illustrates the idea of decomposition into a tree of resource elements, wherein the shown resource elements are only exemplary. Further resource elements may be involved, and further hierarchical levels might be provided.

An aspect of the invention is a decentralized coordination of resources, i.e. instead of performing a central orchestration taking into account the configuration capabilities of all participating resources, the invention proposes to provide separate controllers, each of which is associated with a different resource type.

Therefore, the resource elements are categorized according to the services they provide and the way they can be managed. This associates a type to each resource element. The subelements of the mobile core 240 of a 5G network service could for example be categorized as software defined network functions and the subelements of the data network 250 as well as the backhaul network 331 may be categorized as networks.

A type-specific controller, which may be designed as a Kubernetes operator, preferably manages the lifecycle of the corresponding resource elements, i.e. the resource elements of the respective type.

The resource elements have dependencies amongst one another, wherein dependencies result from the described tree structure, in which two associated resource elements form a pair of service provider and service consumer. However, in addition to these dependencies there may be further dependencies between resource elements. The dependencies between the resource elements dictate in which sequence changes may be applied to resource elements. Relationships preferably can be categorized as either context relationships or service relationships, wherein a context relationship is a relationship in which an instance of a resource element can only be deployed when an instance of another resource element is providing its service, such as for example a software process and a host machine. A service relationship describes a relationship in which a resource element can be installed without the other resource element providing its service but which can only become active when the other resource element is providing its service, such as for example an application server and a database backend.

A further aspect of the invention lies in imposing a generic lifecycle model to all resource elements. Accordingly, each resource element regardless of its type preferably follows a generic lifecycle model, which defines in which states an instance of the respective resource element may be and which transitions are allowed between the states.

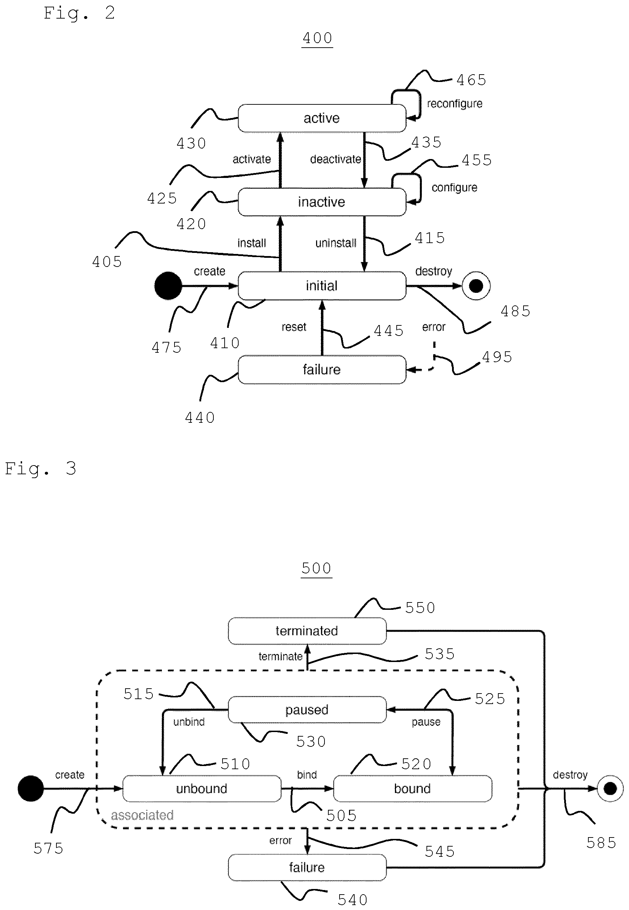

In Fig. 2, a preferred embodiment of the states and allowed transitions of such a generic lifecycle 400 of the instances of the resource elements is exemplarily shown, wherein an initial state 410, an inactive state 420, an active state 430 and a failure state 440 are provided.

In the shown example, the lifecycle of a resource element or an instance thereof runs through the states 410, 420, 430 and 440. In the initial state 410, the specification for the resource element has been created and stored in one or more repositories, which maintain this descriptor along with all corresponding software artefacts that are needed to bring this resource element to life.

The resource instance can be installed from the initial state into its runtime context. It is then in the inactive state 420 and may be configured and/or activated to provide services to its consumers.

In the active state, the resource instance has been deployed into its runtime context and in addition has obtained all the information it requires to access the services of all resource instances it depends upon. It then can expose its services to its consumers, i.e. to those resource instances, which will consume the services it provides.

There may be several reasons for a resource instance to have reached the failure state 440, in which the status of the resource instance is undetermined and therefore regarded to be unusable. In Fig. 2, the reasons for a resource instance to go into the failure state 440 are schematically depicted as error 495.

In order to adhere to the generic lifecycle model, the type-specific controllers preferably are adapted to effect the transitions between the described states, i.e. perform an installation 405 of the controlled resource instance to effect a transition from the initial state 410 to the inactive state 420, perform an uninstallation 415 of the controlled resource instance to effect a transition from the inactive state 420 back to the initial state 410, perform an activation 425 of the controlled resource instance to effect a transition from the inactive state 420 to the active state 430, perform a deactivation of the controlled resource instance to effect a transition from the active state 430 to the inactive state 420. In the shown example, the type-specific controllers are further adapted to perform a configuration 455 of the controlled resource instance, wherein this effects a transition from the inactive state 455 to the inactive state 455, i.e. the state remains the same, but with a changed configuration. Similarly, the type-specific controllers in the shown example are adapted to perform a reconfiguration 465 within the active state 430. Further, the type-specific controllers in the shown example are adapted to perform a reset 445 of the controlled resource instance to effect a transition from the failure state 440 to the initial state 410. Further, the type-specific controllers preferably are adapted to create 475 and/or destroy 485 a controlled resource instance.

Since the type-specific controllers are adapted to control resource instances of different types the functional realization of effecting the respective state transitions may also be type-specific, i.e. it may differ depending on the type of the resource element of the controlled resource instance.

It is to be noted that the declarative model preferably defines a target state, i.e. a desired state, for each resource element, which in the example shown in Fig. 2 typically is the active state 430. The type-specific controllers create and manage resource instances based on the described lifecycles in such a way that preferably the respective target states are reached.

Preferably, for each type of resource element a schema is defined to describe the resource element of that type in a model, wherein this model allows to automate the lifecycle of resource instances of that type. In the following, a service provider may also be referred to as a producer, since the relationship between a service provider and a service consumer may also be regarded as a producer-consumer relationship in the sense of the producer-consumer principle.

The schema preferably defines a set of variables for characteristics of the resource element. In a schema exemplarily the following characteristics may be modeled:
- **UUID:** a unique identifier for the resource element
- **Type:** the type of the resource element
- **Version:** the semantic version for the type of the resource element
- **Name:** a human readable name for the resource element
- **Labels:** a set of key/value pairs which allow to find a resource element via a customizable categorization schema
- **Specification:** the target setup for the resource element
   - **State:** the lifecycle state of the resource element
   - **Configuration:** a type specific information model for the configuration of the resource element
   - **Dependencies:** a list of named and categorized references which allow to identify other resource elements (e.g. via UUID, name or labels)
      - **Type:** the type of the relationship (this can be context or service)
      - **Name:** a human readable name for the relationship
      - **Producer-UUID:** the UUID of the resource element which will provide a service required by the consuming resource element
      - **Producer-Name:** the name of the resource element which will provide a service required by the consuming resource element
      - **Producer-Labels:** a set of key/value pairs of those resource elements which will provide a service required by the consuming resource element
- **Status:** the last observed setup of the resource element
   - **State:** the lifecycle state of the resource element
   - **Configuration:** a type specific information model for the configuration of the resource element
   - **Dependencies:** a list of named and categorized references which allow to identify other resource elements (e.g. via UUID, name or labels)
      - **Type:** the type of the relationship (this can be context or service)
      - **Name:** a human readable name for the relationship
      - **Producer-UUID:** the UUID of the resource element which will provide a service required by the consuming resource element
      - **Producer-Name:** the name of the resource element which will provide a service required by the consuming resource element
      - **Producer-Labels:** a set of key/value pairs of those resource elements which will provide a service required by the consuming resource element
   - **Endpoint:** a type specific information model which describes how the service provided by the resource element can be accessed

The described schema may in particular be a database schema, wherein a respective database record with data according to the schema is generated for each resource instance.

Preferably, relationships between resource instances follow a generic lifecycle model as well to align state-transition changes of interacting resource instances.

In Fig. 3, a preferred embodiment of the states and transitions of a generic lifecycle 500 of a relationship between two resource instances is exemplarily shown, wherein an unbound state 510, a bound state 520, a paused state 530, a failure state 540 and a terminated state 550 are provided. One of the two related resource instances preferably is a provider of a service and the other is a consumer of the service.

A resource instance, which is a consumer of a service provided by another resource instance, first creates a relationship in the unbound state 510. This indicates that the consumer requests the other resource instance to become active and provide a service. If the consumer decides not to make use of the service, it can also destroy 585 an unbound relationship.

The resource instance providing the service can indicate service availability to the consumer by changing the state of the relationship to the bound state 520. The service consumer can decide to terminate the relationship by simply destroying 585 the relationship.

The provider of a service may request to pause 525 service delivery, e.g. for upgrading the service, by changing the state of the relationship to the paused state 530. It will still provide the service, but wait for the service consumer to unbind 515 the service. A service consumer may in this situation also decide to destroy 585 the relationship.

A service provider may forcefully terminate 535 service delivery and indicate this by changing the state of the relationship to the terminated state 550. A service consumer can only acknowledge this situation by destroying 585 the relationship.

A service provider may encounter an error 545 and indicate this by changing the state of the relationship to the failure state 540. A service consumer can only acknowledge this situation by destroying 585 the relationship.

The unbound, bound and paused states 510, 520 and 530 preferably are associated in that in either of these states the relationship may be terminated and go into the terminated state 550, the relationship may go into the failure state 540 in case of an error, or the relationship may be destroyed.

In order to adhere to the generic lifecycle model, the relationship controller preferably is adapted to effect the transitions between the states shown in Fig. 3, i.e. perform a creation 575 of a relationship effecting a transition to the unbound state 510, perform a binding 505 to effect a transition from the unbound state 510 to the bound state 520, perform a pausing 525 to effect a transition from the bound state 520 to the paused state 530, wherein the paused state 530 is an indication for the service consumer to unbind 515 the service, while the provider of the service continues to provide the service. The relationship controller preferably is further adapted to perform an unbinding 515 to effect a transition from the paused state 530 to the unbound state 510, to perform a termination to effect a transition to the terminated state 550, to effect a transition to the failure state 540 in case of an error, and to destroy the relationship.

Preferably, a schema is also defined to describe the relationship between resource elements in a model allowing to automate the lifecycle of relationships, wherein an exemplary set of variables for characterizing a relationship may be the following:
- **UUID:** a unique identifier for the relationship
- **Type:** the type of the relationship (these can be context or service)
- **Version:** the type version of the relationship
- **Name:** a human readable name for the relationship
- **Producer:** a set of attributes which allow to uniquely identify the service producer
- **Consumer:** a set of attributes which allow to uniquely identify the service consumer
- **State:** the state of the relationship
- **Ownership:** indicates if the producer is managed by the consumer

Again, the described schema may in particular be a database schema, wherein a respective database record with data according to the schema is generated for each relationship, i.e. for the explicit dependencies between the resource instances.

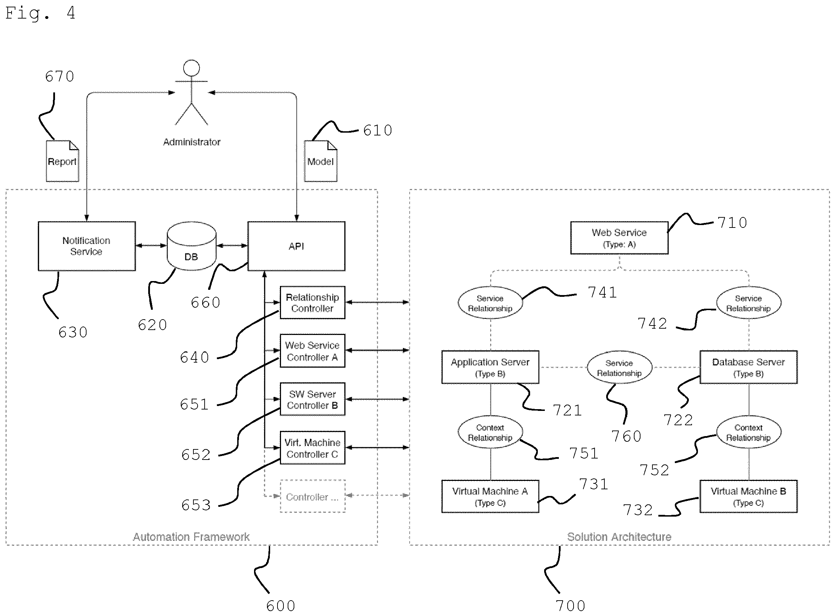

Fig. 4 schematically shows an exemplary system for managing a complex solution architecture, wherein in the shown example the purpose is to provide a web service for customers.

In Fig. 4, the system 600, which is provided as an automation framework, is shown schematically as a high level overview of the main components, which are utilized to consistently manage the lifecycles of the resource instances of the solution architecture 700. The system 600 and its main components as shown in Fig. 4 may comprise a plurality of hardware and /or software components, which may also be distributed over separate communicatively connected computer systems.

In the shown example, the system 600 comprises three type-specific controllers 651, 652, and 653, each of which is adapted to manage resource instances of a separate type, and a relationship controller 640 for managing the relationships between the resource instances. The declarative model is stored in a database 620, which can be accessed by an API (application programming interface) 660. Further, for each instance of a resource element and for the relationships between the resource instances data records according to the above-described schemas are stored in the database 620. The API is also used to enable an administrator to provide change information, wherein the change information preferably is provided in the form of a changed declarative model 610 or parts thereof. In the shown example, a notification service 630 is provided, which has access to the database 620 and which is adapted to provide relevant information to an administrator.

In the shown example, the managed solution architecture 700 comprises several instances of resource elements of different types, exemplarily identified as types A, B and C. Type A is a web service, type B is a server and type C is a virtual machine. The resource instances exemplarily shown in Fig. 4 are interrelated and form a tree-like structure with the web service 710 representing the top-level resource instance forming the root of the tree. A first branch comprises the resource instances 721 and 731 and a second branch comprises the resource instances 722 and 732, wherein the resource instances 721 and 722 are of type B and the resource instances 731 and 732 are of type C. The tree-like structure is formed by the relationships 741, 742, 751 and 752 between the resource instances.

The web service 710 has a service relationship 741 with the application server 721, wherein the web service is the service consumer and the application server is the service provider. Further, the web service 710 has a service relationship 742 with the database server 722, wherein the web service is the service consumer and the database server is the service provider. In the shown example, the application server 721 and the database server 722 are provided as software applications, which are respectively executed on a virtual machine. Therefore, the application server 721 has a context relationship 751 with the virtual machine A, i.e. the resource instance 731, and the database server 722 has a context relationship 752 with the virtual machine B, i.e. the resource instance 732.

In addition to the tree-like structure, a further service relationship 760 is established between the resource instances 721 and 722 in the shown example, wherein the application server may be the service consumer and the database server 722 may be the service provider in order to provide access to information stored in the database to the application server.

In the shown example, the API 660 allows an administrator to:
- create an instance of a resource element by forwarding a model 610 with the specifications for that resource element,
- read the status of a resource element,
- update the specification of a resource element or
- destroy a resource element by deleting the model.

The API 660 may for example be realized as a REST (Representational State Transfer)-API. Kubernetes may be employed for this purpose, wherein preferably a respective REST server may be provided. The API 660 informs the corresponding controllers of any changes related to the resource element and relationship models in the database 620. In addition, it serves for the controllers 640, 651, 652 and 653 as interface for accessing and updating the contents of the database 620. The database 620 preferably is a database backend, which holds the schemas and models for the resource elements and the relationships between the resource elements.

The relationship controller 640 preferably is a generic relationship controller, which informs the service consumer and the service provider of a service provided by the service provider about any change of the state of their relationship, and which is adapted to perform reconciliation algorithms. The reconciliation algorithms of the relationship controller 640 may be either triggered by external events, changes to the database or by timers.

The type-specific controllers 651, 652 and 653 respectively manage the lifecycle of a specific type of resource element according to the above-described guidelines. The type-specific controllers 651, 652 and 653 are adapted to perform reconciliation algorithms, which may be either triggered by external events, changes to the database or by timers.

The notification service 670 preferably is a service, which continuously observes the changes applied in order to generate a dependency graph of all resource elements, determine which resource elements may have conflicting intents and to notify about issues when reconciling the state and configuration of resource instances.

The API 660 preferably provides a service, which
- onboards and removes type-specific resource element controllers as requested by the administrator, and/or
- waits for new requests issued by the administrator and based on the request creates, reads, updates or deletes models in the database 620, and/or
- notifies the relationship controller 640 and type-specific resource element controllers, such as controllers 651, 652, 653, about changes related to those entities which they are controlling, and/or
- notifies the relationship controller 640 and the type-specific resource element controllers, such as controllers 651, 652, 653, about external events and timing events for which they have subscribed.

Preferably, the API 660 performs the above tasks continuously or repeatedly in pre-defined time intervals.

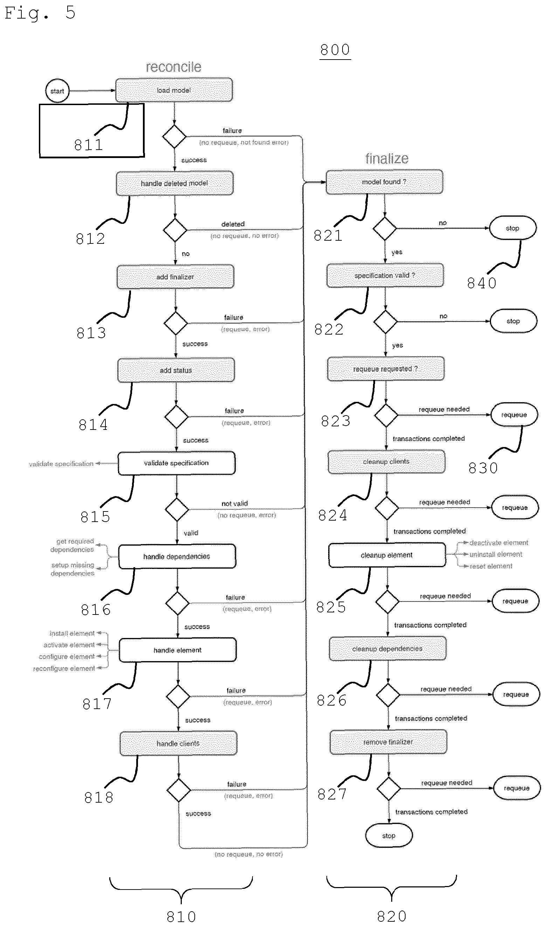

In Fig. 5, an exemplary basic structure of the reconciliation algorithm 800 of type-specific controllers for controlling resource instances of resource elements of a specific type is shown.

The exemplary reconciliation process for a resource instance of a resource element of a specific type as shown in Fig. 5 is triggered, i.e. started, in the following cases:
- a model is created, updated or deleted in the database,
- an external event has occurred or
- a time event has occurred.

In the shown example, the reconciliation algorithm utilizes Kubernetes and accordingly specifically addresses peculiarities of Kubernetes, where finalizers, deletion timestamps, specification and status determine how information is captured in type specific resource elements. The process is split up into two process flows, reconciliation 810 and finalization 820.

The reconciliation process flow 810 attempts to update the dependencies, then the configuration and setup of the resource instance and finally the consumer relationships so that the current state converges towards the target state and all consumer relationships are satisfied.

Since errors might occur, such as required dependencies might not be available or the specification might have changed, it is necessary to cleanup all obsolete resource instances and relationships in the finalization process flow 820. Here first all obsolete consumer relationships are removed, then the obsolete instance is deleted and after that, all obsolete dependencies are purged.

The finalization process flow 820 ends either by indicating that a requeueing 830 of the reconciliation process is to be triggered so that issues can be solved in the next iteration, or by signaling that no further reconciliation is needed. This is the case either when the resource has been deleted successfully or when the resource has converged to the desired target state.

If in step 811 a failure to load the model occurs or in step 812 a deleted model is encountered, the process progresses to the finalization process flow 820 without requesting a requeue. Otherwise, in steps 813 and 814 finalizer and status are added, wherein in case of a failure in one of these steps the process progresses to the finalization process flow 820 with a requeue being requested. In step 815 the specification is validated, wherein in case of an invalid specification the process progresses to the finalization process flow 820 without requesting a requeue.

In step 816 dependencies of the resource instance are handled, wherein this may comprise to get required dependencies, i.e. retrieve respective information on relationships of the resource instance from the database 620 via the API 660, and/or to setup missing dependencies, wherein dependencies in particular are represented by relationships with other resource instances that provide a service for the resource instance. It is noted that for handling dependencies the type-specific controller may preferably communicate with the relationship controller. In step 817 the resource instance itself is handled, which may for example comprise installing, activating, configuring or reconfiguring the resource instance. In step 818, clients are handled, i.e. consumers of a service, which is provided by the resource instance. In case a failure occurs in one of steps 816, 817 or 819 the process progresses to the finalization process flow 820 with a requeue being requested, otherwise the process progresses to the finalization process flow 820 without a requeue being requested.

In the finalization process flow 820 the process is stopped 840, if in step 821 it is detected that no model was found or if in step 822 it is detected that the specification is invalid. In step 823, it is checked whether a requeue has been requested in the course of the reconciliation process flow 810. If that is the case, a requeue 830 is performed.

In step 824 a cleanup of clients, i.e. consumers of a service that is provided by the resource instance, is performed. In step 825 a cleanup of the resource element is performed, which may comprise to deactivate, uninstall or reset the resource instance. In step 826 a cleanup of the dependencies of the resource instance is performed, wherein dependencies in particular are represented by relationships with other resource instances that provide a service for the resource instance.

The cleanup steps 824, 825 and 826 may preferably be performed depending on a finalizer added in step 813, wherein in step 827, when the cleanup transactions are completed, the finalizer is removed. If in any one of the steps 824 to 827 a need for performing a requeue is detected, a respective requeue 830 is initiated, otherwise the process stops.

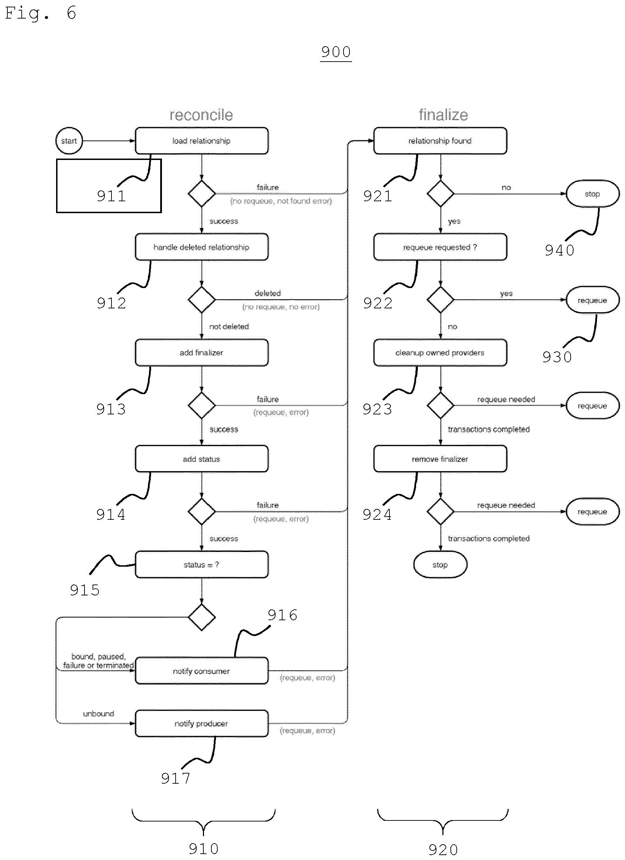

In Fig. 6, an exemplary basis structure of the reconciliation algorithm 900 of the generic relationship controller for controlling relationships is shown.

The exemplary reconciliation process for a relationship as shown in Fig. 6 is triggered, i.e. started, in the following cases:
- a model is created, updated or deleted in the database,
- an external event has occurred or
- a time event has occurred.

In the shown example, the reconciliation algorithm utilizes Kubernetes and accordingly specifically addresses peculiarities of Kubernetes, where finalizers, deletion timestamps, specification and status determine how information is captured. The process is split up into two process flows, reconciliation 910 and finalization 920.

Depending on the status of the relationship, the reconciliation process flow 910 attempts to notify the related service provider and service consumer of the current state of their relationship.

Since errors might occur, in the finalization process flow 920 a requeue of the reconciliation of the relationship might be initiated or the process of removing the relationship may be handled including deleting the provider resource instance, if it is owned by the consumer.

The finalization process flow 920 ends either by indicating that a requeueing 930 of the reconciliation process is to be triggered so that issues can be solved in the next iteration, or by signaling that no further reconciliation is needed. This is the case either when the relationship has been deleted successfully or when notifying the consumer and/or provider was successful.

If in step 911 a failure to load the relationship occurs or in step 912 a deleted relationship is encountered, the process progresses to the finalization process flow 920 without requesting a requeue. Otherwise, in steps 913 and 914 finalizer and status are added, wherein in case of a failure in one of these steps the process progresses to the finalization process flow 920 with a requeue being requested. In step 915 the status of the relationship checked. In the shown example, the service consumer of the relationship is notified, if the relationship is in the bound state, in the paused state, in the failure state or in the terminated state, and the service provider is notified, if the relationship is in the unbound state, wherein the service provider may also be referred to as a producer in the sense of the producer-consumer principle. After notification in either step 916 or 917, the process progresses to the finalization process flow 920 with requesting a requeue.

In the finalization process flow 920 the process is stopped 940, if in step 921 it is detected that no relationship was found. In step 922 it is checked whether a requeue has been requested in the course of the reconciliation process flow 910. If that is the case, a requeue 930 is performed.

In step 923 a cleanup of owned service providers is performed, wherein the cleanup step 923 may preferably be performed depending on a finalizer added in step 913, wherein in step 924, when the cleanup transactions are completed, the finalizer is removed. If in any one of the steps 923 or 924 a need for performing a requeue is detected, a respective requeue 930 is initiated, otherwise the process stops.

It is to be noted that external conditions may cause the state of the relationship to deviate from the target state, wherein in such a case requeuing may be performed, until this situation is consolidated.

In a preferred embodiment, the system 600, in particular the notification service 630, is adapted to calculate a dependency graph of the solution architecture 700 by creating a directed graph where all resource instances represent nodes of the graph and all relationships represent edges pointing from nodes representing the service consumer to the node representing the service provider. In particular, the notification service is adapted to calculate a respective dependency graph, in particular continuously or repeatedly in pre-defined time intervals.

In addition, the system 600, in particular the notification service 630, preferably scans all relationships and resource instances for mismatches between lifecycle states and configurations and reports those which have not been reconciled for a time, which is longer than a pre-defined first threshold value.

Further, the system 600, in particular the notification service 630, may preferably be adapted to detect conflicts in intents, wherein this may be performed by evaluating the state of those relationships, which remain in the terminated, paused, unbound or failed state for a time, which is longer than a pre-defined second threshold value. By combining this information with the information provided by the dependency graph it is possible to identify those resource elements with conflicting interests. The system 600, in particular the notification service 630, preferably is adapted to forward all this information to the administrator, in particular either in regular intervals, on-demand or when conflicts or issues have been detected.

The described method and system proposes a set of design concepts and algorithms for the management of resource elements. These allow to coordinate the lifecycle of distributed interacting technological resources in such a way that the availability of end-to-end customer services can be maintained in a well-defined manner.

The invention performs a choreography or orchestration of interacting resources and preferably leverages the declarative closed-loop automation approach defined by the Kubernetes framework, but can be applied in similar manner to other declarative orchestration solutions.

In the following, some benefits of the inventive approach are described. The described method and system enables to express intent as a declarative model, wherein an intent is modelled as a specification of the desired target state of a set of top-level resource elements and advantageously does not have to describe in which way this intent has to be achieved.

Furthermore, a dynamic derivation of work-breakdown structures is achieved in that the intent of top-level resource elements can be dynamically and recursively broken down into the target states of lower level resource elements, wherein the task of deriving configurations for low-level technical resources is delegated to the controllers, which can dynamically generate this information as needed. This is in particular achieved by controlling resource instances of a communication system by a set of controllers depending on the stored declarative model, wherein the set of controllers comprises a type-specific controller for each type of resource elements defined by the declarative model, wherein each type-specific controller is adapted to control resource instances of the respective associated resource type, and a relationship controller which is adapted to control service-related relationships between resource instances. In response to changing the declarative model, the structure of the resource instances may be dynamically changed, effected by the controllers, wherein resource instances may be newly created and other resource instances may be deleted.

The framework nevertheless allows to determine the full dependency tree of resource elements to support root-cause and impact analysis. Conflicts, i.e. conflicting intent declarations to different resource elements can easily be detected as well.

Furthermore, with advantage a decentralized coordination is achieved, wherein there is no need to create a central orchestration solution, which is knowledgeable of the configuration capabilities of all resource elements. Instead, the knowledge is distributed to a set of resource element type specific controllers, which are capable of managing not only an instance of a resource element itself, but also know how to interoperate with all instances of dependent resource elements and the service consumers the respective resource instance supports with its services.

## Claims

1. A method, comprising the steps of:
a) storing a declarative model (610) in a database (620), wherein the declarative model comprises a plurality of resource elements (100, 210-250, 311-352), each resource element representing a resource of a communication system, wherein each resource element is associated with a resource type, and wherein at least one resource element is modeled to provide a customer service (100, 710) consumable by a customer and the remaining resource elements are modeled to provide a service consumable by another resource element,
b) controlling resource instances of a communication system by a set of controllers (640, 651, 652, 653) depending on the stored declarative model (610), wherein the set of controllers comprises
- a type-specific controller (651, 652, 653) for each type of resource elements defined by the declarative model, wherein each type-specific controller is adapted to control resource instances of the respective associated resource type, and
- a relationship controller (640) which is adapted to control service-related relationships between resource instances.

2. The method of claim 1, wherein the resource elements of the declarative model (610) have a type-dependent hierarchical structure, in particular a tree structure, wherein the root resource element (100, 710) of the tree structure is the resource element, which is modeled to provide the customer service.

3. The method of any one of the preceding claims, wherein
- each resource element in the declarative model is associated with a generic resource lifecycle model (400), wherein the generic resource lifecycle model comprises a pre-defined set of states (410, 420, 430, 440) and a pre-defined set of transitions (405, 415, 425, 435, 445, 455, 465, 475, 485) between the states, wherein each type-specific controller (651, 652, 653) is adapted to manage the lifecycle of a resource instance of the respective associated resource type depending on the generic resource lifecycle model, wherein each type-specific controller in particular is adapted to effect state transitions of a resource instance of the respective associated resource type, and
- each service-related relationship between two resource elements defined in the declarative model is associated with a generic relationship lifecycle model (500), wherein the generic relationship lifecycle model comprises a pre-defined set of states (510, 520, 530, 540, 550) and a pre-defined set of transitions (505, 515, 525, 535, 545, 575, 585) between the states, wherein the relationship controller (640) is adapted to manage the lifecycle of a service-related relationship between two resource instances depending on the generic relationship lifecycle model, wherein the relationship controller in particular is adapted to effect state transitions of a service-related relationship between two resource instances.

4. The method of claim 3, wherein
- each resource element defined in the declarative model is associated with a target state, wherein each type-specific controller controls the resource instances of the respective associated resource type in such a way that the resource instances converge towards their respective target states, and
- each service-related relationship defined in the declarative model is associated with a target state, wherein the relationship controller controls the service-related relationships between resource instances in such a way that the service-related relationships converge towards their respective target states.

5. The method of any one of the preceding claims, wherein change information (610) for changing the stored declarative model is provided and in response to the provided change information the following steps are performed:
c) changing the declarative model, which is stored in the database (620), depending on the provided change information (610),
d) automatically adapting the resource instances controlled by the type-specific controllers (651, 652, 653) and/or the service-related relationships between the resource instances controlled by the relationship controller (640) to the changed declarative model.

6. The method of claim 5, wherein for adapting the resource instances to the changed declarative model at least one type-specific controller executes a first pre-defined reconciliation algorithm (800) and/or for adapting the service-related relationships between the resource instances to the changed declarative model the relationship controller executes a second pre-defined reconciliation algorithm (900).

7. The method of claim 6, wherein the first and/or the second pre-defined reconciliation algorithm is executed iteratively.

8. A system (600), comprising:
- a database (620) with a declarative model (610) stored therein, wherein the declarative model comprises a plurality of resource elements (100, 210-250, 311-352), each resource element representing a resource of a communication system, wherein each resource element is associated with a resource type, and wherein at least one resource element is modeled to provide a customer service (100, 710) consumable by a customer and the remaining resource elements are modeled to provide a service consumable by another resource element, and
- a set of controllers (640, 651, 652, 653) for controlling resource instances of a communication system depending on the stored declarative model, wherein the set of controllers comprises
- a type-specific controller (651, 652, 653) for each type of resource elements defined by the declarative model, wherein each type-specific controller is adapted to control resource instances of the respective associated resource type, and
- a relationship controller (640) which is adapted to control service-related relationships between resource instances.

9. The system of claim 8, wherein the resource elements of the declarative model have a type-dependent hierarchical structure, in particular a tree structure, wherein the root resource element (100, 710) of the tree structure is the resource element, which is modeled to provide the customer service.

10. The system of claim 8 or 9, wherein
- each type-specific controller (651, 652, 653) is adapted to manage the lifecycle of a resource instance of the respective associated resource type depending on an associated generic resource lifecycle model (400), wherein the generic resource lifecycle model comprises a pre-defined set of states (410, 420, 430, 440) and a pre-defined set of transitions (405, 415, 425, 435, 445, 455, 465, 475, 485) between the states, wherein each type-specific controller (651, 652, 653) in particular is adapted to effect state transitions of a resource instance of the respective associated resource type, and
- the relationship controller (640) is adapted to manage the lifecycle of a service-related relationship between two resource instances depending on an associated generic relationship lifecycle model (500), wherein the generic relationship lifecycle model comprises a pre-defined set of states (510, 520, 530, 540, 550) and a pre-defined set of transitions (505, 515, 525, 535, 545, 575, 585) between the states, wherein the relationship controller (640) in particular is adapted to effect state transitions of a service-related relationship between two resource instances.

11. The system of claim 10, wherein
- each resource element defined in the declarative model is associated with a target state, wherein each type-specific controller is adapted to control the resource instances of the respective associated resource type in such a way that a convergence towards the respective target state is effected, and
- each service-related relationship defined in the declarative model is associated with a target state, wherein the relationship controller is adapted to control the service-related relationships between resource instances in such a way that a convergence towards the respective target state is effected.

12. The system of any one of the preceding claims, comprising an application programming interface (660) adapted to receive change information (610), wherein the system (600) is adapted to perform the following steps in response to receiving change information:
- changing the declarative model, which is stored in the database (620), depending on the provided change information (610), and
- automatically adapt the resource instances controlled by the type-specific controllers (6510, 652, 653) and/or the service-related relationships between the resource instances controlled by the relationship controller (640) to the changed declarative model.

13. The system of claim 12, wherein each type-specific controller (6510, 652, 653) is adapted to execute a first pre-defined reconciliation algorithm (800) for adapting controlled resource instances to the changed declarative model, and whereon the relationship controller (640) is adapted to execute a second pre-defined reconciliation algorithm (900) for adapting controlled service-related relationships between the resource instances to the changed declarative model.

14. The system of claim 13, wherein each type-specific controller is adapted to iteratively execute the first pre-defined reconciliation algorithm (800), and wherein the relationship controller is adapted to iteratively execute the second pre-defined reconciliation algorithm (900).
